(19) Europäisches Patentamt

European Patent Office

Office européen des brevets

(11) **EP 1 055 308 B1**

(12) **EUROPÄISCHE PATENTSCHRIFT**

(45) Veröffentlichungstag und Bekanntmachung des Hinweises auf die Patenterteilung:
**27.12.2006 Patentblatt 2006/52**

(51) Int Cl.:
*H04L 9/08* (2006.01)  *G06E 1/00* (2006.01)

(21) Anmeldenummer: **99924996.4**

(86) Internationale Anmeldenummer:
**PCT/EP1999/003395**

(22) Anmeldetag: **17.05.1999**

(87) Internationale Veröffentlichungsnummer:
**WO 1999/062220 (02.12.1999 Gazette 1999/48)**

(54) **VERFAHREN UND VORRICHTUNG ZUR ERZEUGUNG VON WAHLWEISE EINZELPHOTONEN ODER PHOTONENPAAREN IN EINEM OPTISCHEN KANAL**

METHOD AND DEVICE FOR PRODUCING A CHOICE OF EITHER SINGLE PHOTONS OR PAIRS OF PHOTONS IN AN OPTICAL CHANNEL

PROCEDE ET DISPOSITIF POUR LA PRODUCTION AU CHOIX DE PHOTONS INDIVIDUELS OU DE PAIRES DE PHOTONS DANS UN CANAL OPTIQUE

(84) Benannte Vertragsstaaten:
**AT BE CH CY DE DK ES FI FR GB IE IT LI NL PT SE**

(30) Priorität: **28.05.1998 DE 19823849**

(43) Veröffentlichungstag der Anmeldung:
**29.11.2000 Patentblatt 2000/48**

(73) Patentinhaber: **Deutsche Telekom AG**
**53113 Bonn (DE)**

(72) Erfinder:
• **DULTZ, Wolfgang**
**D-65936 Frankfurt am Main (DE)**
• **DULTZ, Gisela**
**D-65936 Frankfurt am Main (DE)**
• **BECKER, Helmar, A.**
**D-63454 Hanau (DE)**
• **SCHMITZER, Heidrun**
**D-93051 Regensburg (DE)**

(74) Vertreter: **Mierswa, Klaus**
**Rechtsanwalt + Patentanwalt,**
**Friedrichstrasse 171**
**68199 Mannheim (DE)**

(56) Entgegenhaltungen:
**DE-A- 19 641 754**

• **SHIMIZU KAORU ET AL: "Quantum communication with a 2-bit message coding for each transmitted photon" PROCEEDINGS OF THE 1997 PACIFIC RIM CONFERENCE ON LASERS AND ELECTRO-OPTICS, CLEO/PACIFIC RIM;CHIBA, JPN JUL 14-18 1997,1997, Seiten 79-80, XP002112182 Pacif Rim Conf Lasers Electro Opt CLEO Tech Dig;Pacific Rim Conference on Lasers and Electro-Optics, CLEO - Technical Digest 1997 IEEE, Piscataway, NJ, USA**
• **MICHLER M ET AL: "Interferometric Bell-state analysis" PHYSICAL REVIEW A (ATOMIC, MOLECULAR, AND OPTICAL PHYSICS), MARCH 1996, APS THROUGH AIP, USA, Bd. 53, Nr. 3, Seiten R1209-R1212, XP002112183 ISSN: 1050-2947**
• **DI GIUSEPPE G ET AL: "Entangled non-local quantum interferometry" FUNDAMENTAL PROBLEMS IN QUANTUM THEORY WORKSHOP, BALTIMORE, MD, USA, 4-7 AUG. 1997, Bd. 46, Nr. 6-8, Seiten 643-661, XP002112184 Fortschritte der Physik, 1998, Akademie Verlag, Germany ISSN: 0015-8208**
• **SHIH Y H ET AL: "Why two-photon not two photons?" FUNDAMENTAL PROBLEMS IN QUANTUM THEORY WORKSHOP, BALTIMORE, MD, USA, 4-7 AUG. 1997, Bd. 46, Nr. 6-8, Seiten 627-641, XP002112358 Fortschritte der Physik, 1998, Akademie Verlag, Germany ISSN: 0015-8208**
• **STREKALOV D V ET AL.: 'Why Biphoton But Not Two Photons?' QELS'97 / THURSDAY MORNING 18 Mai 1997, Seite 142, XP010238351**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 055 308 B1

**Beschreibung**

Technisches Gebiet:

Die Erfindung betrifft ein Verfahren zur Erzeugung von wahlweise Einzelphotonen oder Photonenpaaren in einem optischen Kanal. Die Erfindung betrifft weiterhin eine Vorrichtung zur Durchführung des Verfahrens, die insbesondere als steuerbare Lichtquelle für Ein- oder Zweiphotonenzustände und/oder als steuerbare Weiche bzw. steuerbares Gatter für Quantenzustände verwendbar ist. Die Erfindung betrifft weiterhin ein Netzwerk, welches aus einer Mehrzahl von derartigen Vorrichtungen gebildet ist.

Stand der Technik:

In optisch nichtlinearen Kristallen tritt die Erscheinung der parametrischen Fluoreszenz auf. Unter gewissen Umständen zerfällt ein einzelnes Energiequant (Photon) einer intensiven optischen Pumplichtquelle, meist einer Laserlichtquelle, mit einer gewissen Wahrscheinlichkeit in zwei Energiequanten bzw. Photonen von angenähert der halben Energie (H. Paul, nichtlineare Optik, Band 2, Seite 94 ff, Berlin 1973). Bei monochromatischer bzw. schmalbandiger Anregung ist die spektrale Verteilung der Fluoreszenzphotonen nicht notwendigerweise ebenfalls schmalbandig. Infolge der Energieerhaltung muß allerdings die Summe der Energien der beiden Fluoreszenzphotonen gleich der Energie des Anregungsphotons sein. Ebenso gilt Impulserhaltung. Die parametrische Fluoreszenz tritt daher nur bei bestimmten Anregungsgeometrien auf, d.h. bei bestimmter Ausrichtung des Pumpstrahls relativ zu den optischen Achsen des nichtlinearen Kristalls und bei bestimmten angepaßten Brechungsindizes. Dies führt dazu, daß das Fluoreszenzlicht mit zwei, je nach Anregungsgeometrie verschiedenen, Hauptfrequenzen bzw. Wellenlängen in definierte Raumrichtungen relativ zur Ausbreitungsrichtung des Pumpstrahls emittiert wird. Die beiden Fluoreszenzphotonen werden praktisch gleichzeitig, d.h. innerhalb einer Zeit von etwa 10 Femtosekunden, und je nach Art des nichtlinearen Kristalls und der Anregungsgeometrie in die gleiche oder in verschiedene Raumrichtungen emittiert. Ebenso ist ihre Polarisationsrichtung festgelegt. Die physikalischen Eigenschaften der beiden Photonen der parametrischen Fluoreszenz sind durch eine Reihe von Nebenbedingungen miteinander verknüpft, quantenmechanisch befinden sie sich in einem verschränkten Zustand (entangled state). Bei den verschränkten Photonen handelt es sich quantenmechanisch um einen einzelnen Zustand, in dem sich zwei Photonen unseparierbar aufhalten, wobei durch Messungen an einem der Photonen genaue Aussagen über die physikalischen Eigenschaften des jeweils anderen Photons getroffen werden können. Solche zwei Photonenzustände sind von technischer Bedeutung als Ausgangszustand für die Quantenkryptographie, den optischen Zufallsgenerator oder für den Quantenrechner.

Gegenwärtig sind lediglich klassische Verfahren bekannt, um die Photonen eines Schwarmes voneinander zu trennen und in verschiedene optische Kanäle oder aber gemeinsam in einen einzelnen optischen Kanal, z.B. eine Glasfaser einzukoppeln. Eine bekannte klassische Möglichkeit zur Auftrennung einer Mehrzahl von Photonen und Einkopplung in zwei unterschiedliche Kanäle ist zunächst der gewöhnliche Strahlteiler, eine teilverspiegelte Glasplatte, bei der der Spiegelbelag für die verwendete Wellenlänge teildurchlässig ist oder kleine Löcher enthält. Die Teilverspiegelung kann auch durch aufgedampfte dünne Schichten folgen. Diese Strahlteiler stehen gewöhnlich unter einem Winkel $\alpha$ im Strahlengang, so daß ein Teil des auf den Strahlteiler fallenden Lichts aus der ursprünglichen Strahlrichtung abgelenkt wird. Eine weitere Möglichkeit zur Auskopplung eines Teils der Photonen eines Schwarms ist die Verwendung eines polarisierenden Strahlteilers. Dessen Eigenschaften beruhen auf dem Prinzip der Reflexion an dielektrischen Schichten oder kristalloptischen Prismen, z.B. dem Nicol-Prisma.

Für den Fall, daß die einzelnen Photonen untereinander kohärent sind, stehen auch Interferenzverfahren zu Strahlteilung zur Verfügung. Am bekanntesten sind hier das Michelson-Interferometer, das die konstruktiv interferierenden Photonen transmittiert, die destruktiv interferierenden Photonen reflektiert, sowie das Mach-Zehnder-Interferometer, das konstruktiv und destruktiv interferierende Photonen in zwei unterschiedliche Ausgangskanäle sortiert. Weiterhin gehört auch das Beugungsgitter zu den interferometrisch arbeitenden Strahlteilern.

Eine Eigenschaft aller dieser Strahlteiler ist, daß die Verteilung der einzelnen Photonen am Strahlteiler auf die einzelnen Ausgangskanäle nur bezüglich ihrer Aufteilungswahrscheinlichkeit vorhergesagt werden kann. Ein Photonenpaar wird an einem 1:1 aufteilenden Strahlteiler mit der Wahrscheinlichkeit 1/2 getrennt, unabhängig davon, ob es sich um zwei unterscheidbare oder zwei ununterscheidbare Photonen handelt. Es ist jedoch unmöglich, genaue Aussagen darüber zu treffen, ob ein aktuell vorliegendes Photonenpaar tatsächlich getrennt wird oder zusammen bleibt. Gegenwärtig ist der gezielte Übergang von einem Zweiphotonenzustand zu zwei Einzelphotonen daher nicht möglich. Die gezielte Erzeugung von Einzelphotonen bzw. Photonenpaaren in einem optischen Kanal ist jedoch bei der Verbessung von Quantenkryptographieverfahren, in der Meßtechnik sowie bei der Entwicklung eines Quantencomputers von Bedeutung.

Aus der Veröffentlichung "Why biphoton and not two photons?" von D.V. Strekalov et al., Proceedings of the 1997 Conference in Quantum Electronics and Laser Science, QELS. Baltimore, MD, USA, May 18-23, 1997, Seite 142, Technical Digest Series. IEEE, Piscataway, HJ; USA, geht ein quantenoptischer Versuchsaufbau hervor, in welchem durch spontane parametrische Abwärts-Konversion (spontaneous parametric down-conversion Paare von verschränkten Photonen (entangled photon pair) erzeugt werden. Ein Photon jedes Paares wird in einen ersten Arm eines Interferometers und das andere Photon jedes Paares in den zweiten Arm des Interometers eingekoppelt. Beide Arme werden durch einen Strahlteiler wieder zusammengeführt, von welchem aus jedes der Photonen in einen ersten oder in einen zweiten Detektor einfallen kann.

Technische Aufgabe:

Der Erfindung liegt daher die Aufgabe zugrunde, ein Verfahren zur Erzeugung von wahlweise Einzelphotonen oder Photonenpaaren in einem optischen Kanal anzugeben. Weiterhin soll eine Vorrichtung zur Verfügung gestellt werden, welche unter Durchführung des Verfahrens als steuerbare Lichtquelle für Ein- und Zwelphatonenzustände in der Quantenkryptographie und in der Meßtechnik sowie als steuerbare Weiche oder Gatter für Quantenzustände in Nachrichten- und Rechennetzwerken einsetzbar ist.

Offenbarung der Erfindung und ihrer Vorteile:

Die Lösung der Aufgabe besteht in einem Verfahren mit folgenden Schritten:

Im ersten Verfahrensschritt wird ein Zweiphotonenzustand erzeugt, also ein Paar quantenmechanisch korellierter Photonen, die sich in einem verschränkten Zustand befinden. Das Photonenpaar wird vorzugsweise in bekannter Weise durch parametrische Fluoreszenz unter Verwendung eines optisch nichtlinearen Kristalls, in, geeigneter Anregungsgeometrie erzeugt, wobei als Pumplichtquelle vorzugsweise ein Laser Verwendung findet. Je nach Anregungsgeometrie und Typ des nichtlinearen Kristalls verlassen die Fluoreszenzphotonen den Kristall in die gleiche bzw, unterschiedliche Richtungen unter einem definierten Winkel zur Richtung des anregenden Strahls, wobei die Fluoreszenzphotonen untereinander entweder gleich oder orthogonal linear polarisiert sind. Ist die Frequenz des Pumplichts $2\omega_0$, haben die Einzelphotonen des Photonenpaares die Frequenzen $\omega_1$ bzw. $\omega_2$, wobei $\omega_1 + \omega_2 = 2\omega_0$ gilt.

Im nächsten Schritt wird das Photonenpaar unter Erhalt der quantenmechanischen Korrelation räumlich aufgetrennt, falls die Photonen kollinear emittiert werden. Dies geschieht beispielsweise anhand der Polarisation der Fluoreszenzphotonen, sofern diese unterschiedlich ist, oder anhand der Wellenlänge, z.B. mittels eines wellenlängenselektiven Spiegels.

Im nächsten Schritt wird jeweils ein Photon in jeweils einen optischen Kanal eingekoppelt. Einer der Kanäle enthält ein Zwei- oder Mehrstrahlinterferometer mit veränderlicher optischer Weglängendifferenz $\delta 1_F - \delta 1_S$, der andere Kanal enthält eine optische Verzögerungsstrecke der optischen Länge $\delta 1$. Beide Kanäle werden durch einen Strahlteiler wieder zusammengeführt. Die optischen Kanäle haben die gleiche Grundlänge, worunter die optische Distanz der Stelle, an welcher die Photonen des Photonenpaars räumlich getrennt werden, zum Strahlteiler bzw. zu den Detektoren beim Durchlaufen der jeweiligen Teilstrahlengänge verstanden wird, beim Strahlengang mit Interferometer die über die Interferometerarme gemittelte Länge. Bei der Bestimmung der Grundlänge, sind die im Interferometer bzw. in der optischen Verzögerungsstrecke zurückgelegten optischen Wege zu berücksichtigen.

Das in einem der optischen Kanäle verwendete Interferometer ist ein Zweistrahl-Interferometer, z.B. ein Mach-Zehnder- oder ein Michelson-Interferometer, oder ein Mehrstrahl-Interferometer, z.B. ein Fabry-Perot-Interferometer oder ein Echelon. Wesentlich dabei ist, daß die optische Gangdifferenz $\delta l_F - \delta l_S$ über wenigstens eine halbe mittlere Wellenlänge $\lambda$ der Fluoreszenzphotonen verstellbar ist. Weiterhin kann das Interferometer eine linear doppelbrechende Kristallplatte, insbesondere eine Quarzplatte sein, deren optische Gangdifferenz durch einen zusätzlichen Kompensator so erweitert ist, daß die Gangdifferenz um mehr als eine halbe Wellenlänge $\lambda_1$ derjenigen Photonen, die das Interferometer durchlaufen, verstellt werden kann.

Die im anderen Kanal angeordnete optische Verzögerungsstrecke ist vorzugsweise ebenso wie die optische Weglängendifferenz im Interferometer variabel. Die optische Verzögerungsstrecke ist vorzugsweise durch einen optischen Posaunenzug oder durch ein elektrooptisches Element, dessen Brechungsindex veränderbar ist, wodurch eine variable Phasendifferenz induzierbar ist, realisiert. Weiterhin kann die genannte Verzögerungsstrecke auch aus einer Verzögerungsstrecke fester Länge und einem Stellelement, das eine variable Phasendifferenz entsprechend etwa einer halben mittleren Wellenlänge einzuführen imstande ist, zusammengesetzt sein. Die optische Verzögerungsstrecke muß jedoch nicht notwendig variabel sein.

Im nächsten Verfahrensschritt werden schließlich die Größen $\delta l_F$, $\delta l_S$ und $\delta l$ derart abgestimmt, daß die Wahrscheinlichkeit K für Koinzidenzen zwischen den Ausgängen des Strahlteilers wahlweise etwa K=0 oder K=1 oder etwa einen vorbestimmten Zwischenwert beträgt. Die Wahrscheinlichkeit K ist der Koinzidenzrate proportional, die leicht bestimmt werden kann, indem jeweils ein Detektor an jeweils einem Ausgang des Strahlteilers angeordnet und die Koinzidenzrate zwischen beiden Ausgängen in bekannter Weise durch Auswertung der Zählereignisse ermittelt wird. Eine Koinzidenzwahrscheinlichkeit von Null entspricht dabei dem Fall, daß beide Photonen des ursprünglich erzeugten Photonenpaars in einen gemeinsamen Ausgangskanal des Strahlteilers, also kollinear emittiert werden. Dabei ist unbestimmt, welchen der beiden Ausgangskanäle das Photonenpaar nimmt. Die Wahrscheinlichkeit für einen bestimmten Kanal beträgt jeweils 50%. Eine maximale Koinzidenzrate, entsprechend $K \approx 1$, erhält man dagegen für den Fall, daß beide Photonen in unterschiedliche Ausgangskanäle des Strahlteilers gelangen und somit je Ausgangskanal nur ein Photon vorliegt.

Zur Veränderung der optischen Weglängen $\delta l_F$, $\delta l_S$ und/oder $\delta l$ sind ein oder mehrere mechanische und/oder elektrooptische Stellelemente vorgesehen, die vorzugsweise fernsteuerbar sind. Die mechanischen Stellelemente sind beispielsweise Spiegel, welche mittels eines Motors verschiebbar sind. Vorteilhaft, insbesondere zur Verstellung der Phase im Interferometer, sind jedoch elektronisch ansteuerbare Flüssigkristallzellen und/oder elektrooptische Kristallmodulatoren. Die Verstellung der Phase gelingt mit Flüssigkristallen in Mikrosekunden, mit Hilfe von elektrooptischen Kristallmodulatoren sogar in Nanosekunden. Ein schnelles und präzises Verstellen der Phase zwischen zwei vorbestimmten Werten ist insbesondere für den Fall interessant, daß schnell zwischen einem oder zwei Photonen im Ausgangskanal umgeschaltet werden soll.

Vorzugsweise wird die optische Weglängendifferenz im Interferometer ($\delta l_F - \delta l_S$) so eingestellt, daß sie ein ganzzahliges Vielfaches der halben mittleren Wellenlänge $\lambda_0$ der Photonen des Photonenpaars beträgt, also

$$\left| \delta l_F - \delta l_S \right| = \frac{n}{2} \lambda_0$$

mit n=0, 1, 2... Gleichzeitig wird die optische Länge $\delta l$ der Verzögerungsstrecke auf den mittleren Gangunterschied $\frac{1}{2}(\delta l_F + \delta l_S)$ des Interferometers abgestimmt. Je nachdem, ob die optische Weglängendifferenz im Interferometer ein geradzahliges oder ungeradzahliges Vielfaches der halben Wellenlänge $\lambda_0$ ist, werden nur Photonenpaare oder Einzelphotonen im Ausgangskanal erzeugt. Der Übergang von n zu $n \pm 1$ entspricht dem Übergang von $K \approx 0$ zu $K \approx 1$ oder umgekehrt. Da die Abstimmung der Vorrichtung für nichtlineare Kristalle vom Typ I bzw. II etwas verschieden voneinander ist, wird die Einstellung der optischen Längen $\delta l_F$, $\delta l_S$ und $\delta l$ vorzugsweise experimentell geprüft, indem die Koinzidenzrate gemessen wird.

Die Abstimmung der Vorrichtung kann auch vollständig experimentell erfolgen, indem die Wahrscheinlichkeit K für Koinzidenzen zwischen den Ausgängen des Strahlteilers in Abhängigkeit der Größen $\delta l_F$, $\delta l_S$ und/oder $\delta l$ bestimmt wird. Die zu $K \approx 0$ und/oder zu $K \approx 1$ und/oder zu einem vorbestimmten Zwischenwert führenden Einstellungen der optischen Längen werden dabei jeweils protokolliert, so daß zwischen Einzelphotonen und Photonenpaaren im Ausgangskanal umgeschaltet werden kann, indem zwischen protokollierten Werten für die entsprechenden Längen bzw. zwischen den entsprechenden Einstellungen der Stellelemente umgeschaltet wird.

Kurzbeschreibung der Zeichnung, in der zeigen:

Figur 1a, 1b die Erzeugung eines Photonenpaars durch parametrische Fluoreszenz an einem nichtlinearen Kristall vom Typ I bzw. II;
Figur 2 schematisch eine erfindungsgemäße Vorrichtung, welche als steuerbare Lichtquelle für Ein- oder Zweiphotonenzustände dient;
Figur 3 zwei hintereinander geschaltete derartige Vorrichtungen;
Figur 4 vier zu einem Netzwerk geschaltete Vorrichtungen.

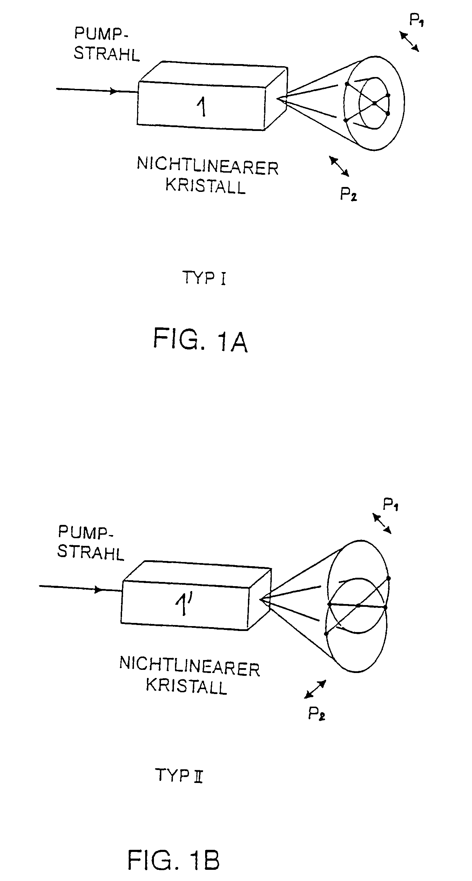

Figur 1 zeigt schematisch die Erzeugung eines quantenmechanisch korrelierten Photonenpaars durch parametrische Fluoreszenz. Dazu wird ein nichtlinearer Kristall 1 vom Typ I bzw. Kristall 1' vom Typ II mit einem Laserstrahl hoher Intensität gepumpt. Der Kristall muß dabei so geschnitten und relativ zum Anregungsstrahl orientiert sein, daß die sog.

Phasenanpassungsbedingungen erfüllt sind und parametrische Fluoreszenz nicht schon durch Energie- und Impulserhaltung ausgeschlossen ist. Bei nichtlinearen Kristallen vom Typ I zerfällt ein Pump-Photon mit einer gewissen Wahrscheinlichkeit in zwei Fluoreszenzphotonen mit paralleler linearer Polarisation $P_1$ bzw. $P_2$, die in Raumrichtungen emittiert werden, welche von der Anregungsgeometrie abhängen. Bei nichtlinearen Kristallen vom Typ II werden entsprechend zwei zueinander orthogonal polarisierte Photonen erzeugt.

Bevorzugte Ausführungsformen:

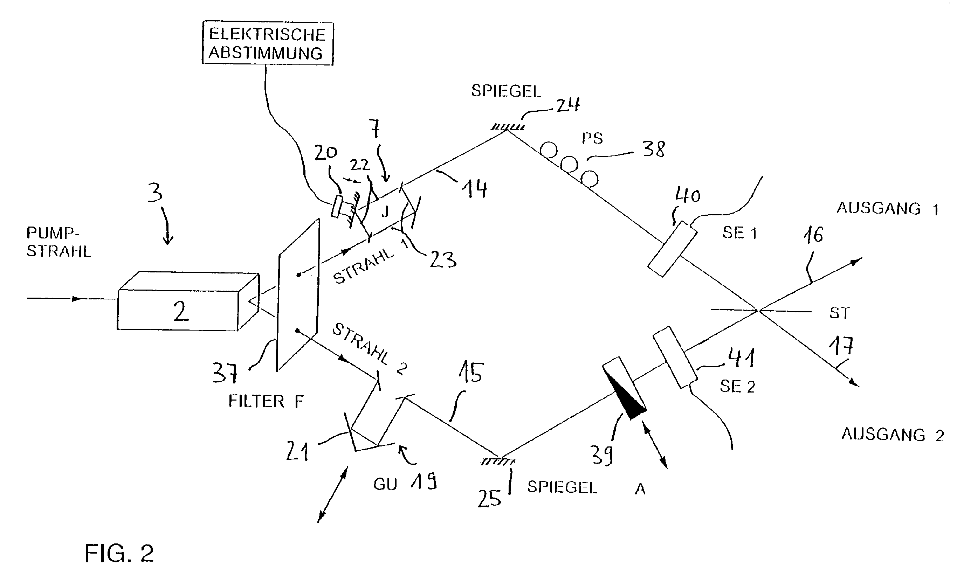

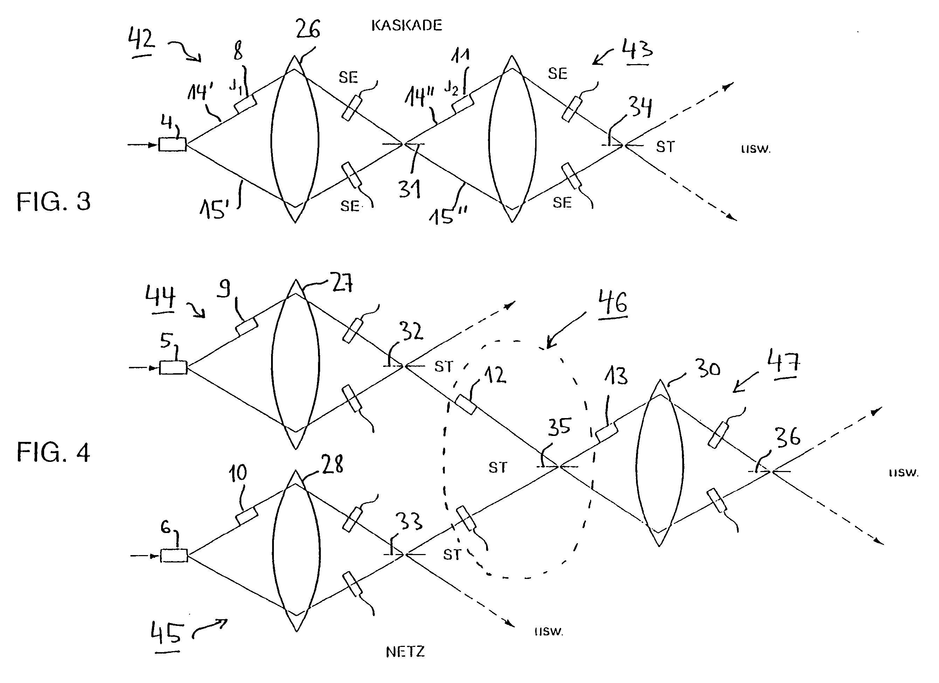

Figur 2 zeigt eine Anordnung zur Durchführung des erfindungsgemäßen Verfahrens, welche als steuerbare Lichtquelle für Ein- oder Zweiphotonenzustände und/oder als steuerbare Weiche bzw. steuerbares Gatter für Quantenzustände einsetzbar ist, auch im Rahmen eines optischen Rechennetzwerks gemäß der Figuren 3 und 4. Die Vorrichtung weist eine Lichtquelle 3 für quantenoptisch korrelierte Photonenpaare auf. Diese Lichtquelle ist ein geeignet geschnittener und orientierter optisch nichtlinearer Kristall 2, welcher von einem Laserstrahl hoher Intensität und geeigneter Frequenz gepumpt wird. Durch parametrische Konversion der Pump-Photonen entstehen zwei Fluoreszenzstrahlen, welche den Kristall 2 in unterschiedliche Richtungen relativ zur Ausbreitungsrichtung des Pumpstrahls verlassen. Jeweils ein Photon des einen Strahls befindet sich mit einem anderen Photon des anderen Strahls in einem quantenmechanisch verschränktem Zustand.

Das Pumplicht wird mit einem Filter 37 unterdrückt. Dieses ist vorzugsweise ein optischer Bandpaßfilter, welcher für die Pumpwellenlänge undurchlässig ist, das Fluoreszenzlicht der Fluoreszenzwellenlängen $\lambda_1$ bzw. $\lambda_2$ jedoch transmittiert. Am Ausgang der Lichtquelle 3 kann weiterhin ein Filter angeordnet sein, welches die Intensität des Fluoreszenzlichts soweit reduziert, daß sich mit einer gewissen Wahrscheinlichkeit jeweils nur ein Photonenpaar in der Anordnung befindet.

Die quantenmechanisch korrelierten Fluoreszenzphotonen werden in jeweils einen Teilstrahlengang 14 bzw. 15 der Vorrichtung eingekoppelt. Durch Umlenkung über ein oder mehrere Spiegel 24, 25 werden die Teilstrahlengänge 14, 15 auf einem Strahlteiler 18 wieder zusammengeführt.

Mit dem Strahlteiler 18 werden beide Teilstrahlengänge 14, 15 überlagert und in zwei separate Ausgangskanäle 16, 17 überführt. Statt mit Spiegeln 24, 25 kann die Zusammenführung der beiden Teilstrahlengänge auch mit einer Linse vorgenommen werden, wie in den Figuren 3 und 4 dargestellt.

Erfindungsgemäß ist in einem der Teilstrahlengänge 14 ein Interferometer 7 angeordnet, welches hier ein Mach-Zehnder-Interferometer mit den Interferometerarmen 22 und 23 ist. Der Interferometerarm 22 hat die optische Länge $\delta l_F$ , welche mit einem elektrisch abstimmbaren Stellelement 20 variiert werden kann. Der Interferometerarm 23 hat die feste Länge $\delta l_S$. Somit ist die optische Weglängendifferenz $\delta l_F - \delta l_S$ im Interferometer 7 mittels des Stellelements 20 veränderbar.

Im anderen Teilstrahlengang 15 befindet sich erfindungsgemäß eine optische Verzögerungsstrecke 19, die hier ein optischer Posaunenzug ist. Die optische Länge $\delta l$ der Verzögerungsstrecke 19 ist mittels eines weiteren Stellelements 21 variabel. Dieses ist vorzugsweise wie das Stellelement 20 elektrisch ansteuerbar, wodurch die Länge $\delta l$ der Verzögerungsstrecke 19 ferngesteuert verändert werden kann.

Die optischen Längen der Teilstrahlengänge 14, 15 ohne Berücksichtigung der Längen der Interferometerarme 22, 23 bzw. der optischen Verzögerungsstrecke 19 sind vorzugsweise gleich. Für den Fall eines mit einem nichtlinearen Kristall vom Typ I erzeugten Photonenpaars gleicher Polarisation kann dann die Koinzidenzrate K für Koinzidenzen zwischen den Ausgängen 16, 17 wie folgt angegeben werden:

$$K = \tfrac{1}{2}\{1 - \tfrac{1}{2}\exp\left[-\tfrac{1}{c^2 a^2}\left(\delta l_P - \delta l\right)^2\right] - \tfrac{1}{2}\exp\left[-\tfrac{1}{c^2 a^2}\left(\delta_S - \delta l\right)^2\right] +$$

$$\cos\left[\tfrac{\omega_0}{c}\left(\delta_P - \delta l_S\right)\right]\left[\exp\left[-\tfrac{1}{4\,c^2 a^2}\left(\delta l_F - \delta l_S\right)^2\right] - \exp\left[-\tfrac{1}{c^2 a^2}\left(\tfrac{\delta l_F + \delta l_S}{2} - \delta l\right)^2\right]\right]\}$$

Hierbei sind $\delta l_F$, $\delta l_S$, $\delta l$ jeweils die optischen Wege in den Interferometerarmen 22, 23 bzw. in der Verzögerungsstrecke 19, c ist die Lichtgeschwindigkeit und a bestimmt die spektrale Breite des Spektrums der beiden Strahlen. Für beide Strahlen wurde eine Gauss-Verteilung mit der mittleren Frequenz $\omega_0$ und $\omega_1 + \omega_2 = 2\,\omega_0$ angenommen.

Im folgenden wird angenommen, daß die spektrale Breite der beiden Photonen 1/a so groß ist, daß der Gangunterschied $\delta l_F - \delta l_S$ des Interferometers die Kohärenzlänge $c \cdot a$ um ein Mehrfaches übertrifft. Weiterhin wird angenommen, daß die optischen Weglängen $\delta l_F$, $\delta l_S$ derart aufeinander abgestimmt sind, daß gilt $\delta l = 1/2\,(\delta l_F + \delta l_S)$. Dem steht selbstverständlich der Fall gleich, daß die gesamte optische Länge des Teilstrahlengangs 15 einschließlich der optischen Verzögerungsstrecke 19 mit der mittleren optischen Länge des Teilstrahlengangs 14 einschließlich der Länge der Interferometerarme 22, 23 übereinstimmt.

Für diesen Fall geht die Koinzidenzrate K über in

$$K \approx \tfrac{1}{2}\left\{1 - \cos\left[\tfrac{\omega_0}{c}\left(\delta l_F - \delta l_S\right)\right]\right\}$$

Je nach dem Gangunterschied bzw. der Phasendifferenz im Interferometer $\delta l_F - \delta l_S$ treten folgende Fälle auf:

a) Falls $\cos\left[\tfrac{\omega_0}{c}\left(\delta_F - \delta l_S\right)\right] = +1$, d.h. $\delta l_F - \delta_S = n\,\tfrac{2\pi c}{\omega_0} = n\lambda_0$ mit n= 0,1, ..., gilt K = 0. Dies bedeutet, daß beide Photonen die Vorrichtung in einem der Ausgänge 16, 17 zusammen als Paar verlassen. Dabei ist jedoch ungewiß, welchen Ausgang sie nehmen.

b) Falls $\cos\left[\frac{\omega_0}{c}(\delta l_F - \delta l_S)\right] = -1$, d.h. $\delta l_F - \delta l_S = \frac{2n+1}{2}\lambda_0$, ist K = 1. Dies bedeutet, daß die beiden Photonen die Vorrichtung über beide Ausgänge 16, 17 verlassen, also wieder getrennt werden.

Die Quantenkorrelation des Photonenpaars bleibt in beiden Fällen erhalten. Damit beeinflußt die Vorrichtung den Quantenzustand des Photonenpaars in gezielter Weise und ist als Weiche oder Gatter in einem Quantenrechner einsetzbar. Voraussetzung für diese Eigenschaft der Vorrichtung sind die kleine Kohärenzlänge der einzelnen Photonen aus dem nichtlinearen Kristall, die Abstimmung von $\delta l$ auf dem mittleren Gangunterschied des Interferometers und eine Kohärenzlänge des Pumplaserlichts, die größer ist als $\delta l_F$ - $\delta l_S$ ist. Da die Verstellung der Phase im Interferometer mit geeigneten Stellelementen 20, z.B. mit Flüssigkristallen in Mikrosekunden, mit Hilfe von elektrooptischen Kristallmodulatoren sogar in Nanosekunden erfolgen kann, ist die Umschaltung zwischen den Werten mit K = 0 und K = 1 bzw. dem im experimentell erzielten minimalen bzw. maximalen K - welches den theoretischen Fällen K = 0 bzw. K = 1 entspricht - sehr schnell möglich.

Falls die Länge $\delta l$ der optischen Verzögerungsstrecke 19 nicht bei jedem Umschaltvorgang auf den mittleren Gangunterschied des Interferometers 7 eingestellt werden soll, können die optischen Längen $\delta l_F$, $\delta l_S$ der Interferometerarme 22, 23 einzeln mittels zweier geeigneter Stellelemente 20 um jeweils eine Viertelwellenlänge $\lambda_0$ verringert bzw. vergrößert werden. Somit bleibt der mittlere Gangunterschied im Interferometer 7 konstant, während sich die Phasendifferenz um $\lambda_0/2$ ändert, was dem Umschalten von K = 0 auf K = 1 bzw. umgekehrt entspricht.

In die drei Strahlengänge 14, 15 sind in einer Erweiterung der Erfindung weitere Stellelemente 38, 39, 40, 41 eingebracht. Der Absorber 39 dient dabei zur Anpassung der Intensität im Teilstrahlengang 15, das Polarisationstellelement 38 dient zur Anpassung der Polarisation der den Teilstrahlengang 14 durchlaufenden Photonen, falls die Photonen am Ausgang in einem anderen Polarisationszustand als ursprünglich erzeugt vorliegen sollen. Die weiteren Stellelemente 40, 41 dienen zur gezielten Manipulation der einen Teilstrahlengang durchlaufenden Photonen bezüglich Frequenz und/oder Phase.

Der in Figur 2 gezeigte Aufbau kann ganz oder teilweise in einer Ausführung mit optischen Fasern erfolgen. Die einzelnen Bauteile in Faserausführung sind bekannt. Weiterhin kann der nichtlineare optische Kristall 2 durch eine optisch nichtlineare Faser mit geeignetem Faserkoppler ersetzt werden. Eine Faserausführung, insbesondere des Strahlteilers 18, hat den Vorteil, daß die Einkopplung der die Vorrichtung verlassenen Photonen direkt durch Spleißen oder Stecken in eine weitere Faser erfolgen kann. Damit besteht auch die Möglichkeit, weitere Vorrichtungen der beschriebenen Art in einfacher Weise zu kaskadieren oder zu vernetzen, wie in den Figuren 3 und 4 dargestellt.

In jeder der einzelnen Stufen besteht die Möglichkeit, Polarisations- und Phasenmanipulationen an dem Zweiphotonenzustand vorzunehmen. Je nach Belieben können einzelne Photonen oder das Photonenpaar beeinflußt werden. Hierzu dienen elektrooptische Stellelemente 40, 41, die als Verzögerungsplatten in Flüssigkristallausführung oder als Kerrzellen bekannt sind. Auch eine definierte Verschiebung der spektralen Frequenz eines oder beider Photonen mit Hilfe von akustooptischen Braggzellen oder mit rotierenden $\lambda/2$-Platten bzw. ihrem elektrooptischen Analogon sowie eine optische Speicherung der Photonen, z.B. in Glasfaserschleifen oder Resonatoren, kann an dieser Stelle vorgenommen werden.

Wird das Interferometer in einem der Teilstrahlengänge 14, 15 als polarisierendes Interferometer, z.B. als Quarzplatte ausgeführt, so kann die Abstimmung der Phasenverschiebung bzw. der Gangdifferenz im Interferometer 7 auch außerhalb des Interferometers 7 mit Hilfe von Pancharatnams Phase vorgenommen werden, z.B. indem ein weiterer Polarisator in den Strahlengang eingebracht wird.

Weiterhin ist es möglich, die Vorrichtung gezielt auf den Fall K = 0, d.h. ein Photonenpaar in einem der Ausgänge 16, 17, einzustellen, um so einen definierten Zustand im optischen Ausgangskanal herzustellen. Für diesen Fall kann auf die variablen Weglängen, also auf die Stellelemente, nach einmaliger Einjustierung der Vorrichtung verzichtet werden.

Figur 3 zeigt zwei hintereinander geschaltete Vorrichtungen 42,43. Dabei besteht die erste Vorrichtung 42 aus einer Lichtquelle 4 für Photonenpaare, die ein nichtlinearer optischer Kristall mit geeigneter Anregung ist. Die Lichtquelle 4 erzeugt ein Photonenpaar, wobei die Einzelphotonen in jeweils einen Teilstrahlengang 14', 15' der ersten Vorrichtung 42 eingekoppelt werden. Im Teilstrahlengang 14' befindet sich ein Interferometer 8 sowie ein Stellelement SE. Im zweiten Teilstrahlengang 15' befindet sich ein weiteres Stellelement SE. Mittels einer Linse 26 werden beide Teilstrahlen auf einem Strahlteil 31 vereinigt. Die erste Vorrichtung 42 ist in der oben beschriebenen Weise einjustiert, wobei durch Veränderung der Gangdifferenz im Interferometer 8 und/oder durch Ansteuerung der Stellelemente SE zwischen den Fällen mit K = 0 bzw. K = 1 umgeschaltet werden kann.

Der ersten Vorrichtung 42 ist nunmehr eine zweite gleichartige Vorrichtung 43 nachgeschaltet. Dabei dient die Vorrichtung 42 als Lichtquelle für die Vorrichtung 43, indem die Ausgangskanäle 14" bzw. 15" die Eingangskanäle der zweiten Vorrichtung 43 darstellen, also direkt in die Teilstrahlengänge 14", 15" der zweiten Vorrichtung 43 übergehen.

Erfindungsgemäß weist auch die Vorrichtung 43 im Teilstrahlengang 15" ein Interferometer 11 auf. Weiterhin sind Stellelemente SE in den beiden Teilstrahlengängen 14", 15" angeordnet. Mittels einer Linse 29 werden beide Teilstrahlengänge auf einen weiteren Strahlteiler 34 zusammengeführt. Die Kaskade kann durch Hintereinanderschalten weiterer Vorrichtungen beliebig fortgesetzt werden.

Figur 4 zeigt vier miteinander verschaltete erfindungsgemäße Vorrichtungen 44, 45, 46, 47, wobei die Vorrichtungen 44 und 45 einander parallel geschaltet sind, die Vorrichtung 46 aus jeweils einem Ausgangskanal der Vorrichtungen 44 und 45 besteht, die auf einem Strahlteiler 35 zusammengeführt werden, sowie die Vorrichtung 47 der Vorrichtung 46 nachgeschaltet ist.

Die Vorrichtungen 44 und 45 weisen als Lichtquelle 5, 6 ein nichtlinearen Kristall auf, die Lichtquelle der Vorrichtung 46 besteht aus jeweils einem Ausgangskanal der Elemente 44, 45, wobei das Element 46 seinerseits die Lichtquelle des nachgeschalteten Elements 47 darstellt. Die Teilstrahlengänge der einzelnen Elemente werden entweder durch Linsen 27, 28, 30 auf die entsprechenden Strahlteiler 32, 33 bzw. 36 geführt. Im Fall des Elements 46 wird die Zusammenführung der Teilstrahlengänge auf den Strahlenteiler 35 allein durch die geometrische Anordnung realisiert. Jeder der Vorrichtungen ist weiterhin ein Interferometer 9, 10, 12, 13 in einem der Teilstrahlengänge sowie ein Stellelement im jeweils anderen Teilstrahlengang, jedenfalls auch in beiden Teilstrahlengängen, zugeordnet.

Durch geeignete Einstellung der Phasendifferenzen in den Interferometern und/oder der Stellelemente kann der Pfad eines oder mehrerer Photonenpaare bzw. der Einzelphotonen in einem derartigen Netzwerk in gewissen Grenzen vorbestimmt werden. Mit der Kaskadierung bzw. der Vernetzung und dem gezielten Eingriff in den Quantenzustand des bzw. der Photonenpaare sind damit die Grundelemente einer quantenoptischen Rechenmaschine gegeben.

Gewerbliche Anwendbarkeit:

Die Erfindung ist als ein Grundelement eines Quantenrechners und für Kryptographieverfahren in vielen Bereichen der Informationstechnologie gewerblich anwendbar.

Liste der Bezugszeichen:

| | |
|---|---|
| 1,1',2 | nichtlinearer Kristall |
| 3,4,5,6 | Lichtquelle |
| 7-13 | Interferometer |
| 14,15,14',14" | |
| 15', 15" | Teilstrahlengang (opt. Kanal) |
| 16,17 | Ausgangskanal |
| 18,31-36 | Strahlteiler |
| 19 | optische Verzögerungsstrecke (opt. Posaunenzug) |
| 20,21,SE | Stellelement |
| 22,23 | Interferometerarm |
| 24,25 | Spiegel |
| 26-30 | Linse |
| 37 | Filter |
| 38 | Polarisationsstellelement |
| 39 | Absorber |
| 40,41 | phasen- und/oder frequenzveränderndes Stellelement |
| 42-47 | Vorrichtung (opt. Weiche/Gatter) |

**Patentansprüche**

1. Verfahren zur Erzeugung von wahlweise Einzelphotonen oder Photonenpaaren in einem optischen Kanal (16, 17) mit folgenden Schritten:

- Erzeugen eines Zweiphotonenzustandes (Photonenpaar);
- räumliches Auftrennen des Photonenpaars unter Erhalt der quantenmechanischen Korellation, falls die Photonen kollinear emittiert werden;
- Einkoppeln jeweils eines Photons in jeweils einen optischen Kanal (14, 14',14"), wobei der eine Kanal (15,15', 15") ein Interferometer (7-13) mit veränderlicher optischer Weglängendifferenz $\delta l_F - \delta l_S$ und der andere Kanal eine optische Verzögerungsstrecke (19) der optischen Länge $\delta l$ enthält;

- räumliches Zusammenführen beider Kanäle durch einen Strahlteiler (18, 31-36);
- Abstimmen der Größen $\delta l_F$, $\delta l_S$ und $\delta l$ derart, daß die Wahrscheinlichkeit K für Koinzidenzen zwischen den Ausgängen (16,17) des Strahlteilers wahlweise etwa K=0 oder etwa K=1 oder etwa einen vorbestimmten Zwischenwert beträgt, wobei K=0 einem Photonenpaar in einem der Ausgangskanäle (16,17) des Strahlteilers und K=1 zwei Einzelphotonen in beiden Ausgangskanälen des Strahlteilers entspricht.

2. Verfahren nach Anspruch 1, **dadurch gekennzeichnet,**
**daß** das Photonenpaar durch parametrische Fluoreszenz erzeugt wird, indem ein optisch nichtlinearer Kristall (1,1', 2) mit Laserlicht der Frequenz $2\omega_0$ bzw. der Wellenlänge $\frac{1}{2}\lambda_0$ gepumpt wird.

3. Verfahren nach Anspruch 2, **dadurch gekennzeichnet,**
**daß** Pumplaserlicht verwendet wird, dessen Kohärenzlänge größer als die Weglängendifferenz $\delta l_F$ - $\delta l_S$ im Interferometer ist.

4. Verfahren nach einem der Ansprüche 1 bis 3, **dadurch gekennzeichnet,**
**daß** die optische Weglängendifferenz im Interferometer ($\delta l_F$ - $\delta l_S$) auf etwa ein ganzzahliges Vielfaches der halben mittleren Wellenlänge $\lambda_0$ der Photonen des Photonenpaars eingestellt wird, also $\left|\delta_F - \delta l_S\right| = \frac{n}{2}\lambda_0$ mit n=0, 1, 2..., und $\delta l$ auf den mittleren Gangunterschied $\frac{1}{2}(\delta l_F + \delta l_S)$ des Interferometers abgestimmt wird, also $\delta l \approx \frac{1}{2}(\delta l_F + \delta_S)$, wobei der Übergang von n zu n$\pm$1 dem Übergang von K$\approx$0 zu K$\approx$1 oder umgekehrt entspricht.

5. Verfahren nach einem der Ansprüche 1 bis 3, **dadurch gekennzeichnet,**
**daß** die Wahrscheinlichkeit K für Koinzidenzen zwischen den Ausgängen des Strahlteilers in Abhängigkeit der Größen $\delta l_F$, $\delta l_S$ und/oder $\delta l$ bestimmt wird, indem zwei Detektoren an den Ausgängen des Strahlteilers angebracht werden und die Koinzidenzrate experimentell gemessen wird, wobei die zu K$\approx$0 und/oder K$\approx$1 und/oder einem vorbestimmten Zwischenwert führenden Einstellungen $\delta l_F$, $\delta l_S$ und $\delta l$ jeweils protokolliert werden.

6. Verfahren nach Anspruch 4 oder 5, **dadurch gekennzeichnet,**
**daß** durch ferngesteuerte Veränderung der Größen $\delta l_F$, $\delta l_S$ und/oder $\delta l$ zwischen den Fällen mit K$\approx$0 oder K$\approx$1 oder einem Zwischenwert umgeschaltet wird.

7. Vorrichtung zur Durchführung des Verfahrens nach einem der vorangegangenen Ansprüche, insbesondere als steuerbare Lichtquelle für Ein- oder Zweiphotonenzustände und/oder als steuerbare Weiche bzw. steuerbares Gatter für Quantenzustände, bestehend aus

- einer Lichtquelle (3,4,5,6) für quantenoptisch korellierte Photonenpaare;
- Mitteln zur Trennung der Photonenpaare, falls die Photonen kollinear emittiert werden;
- wenigstens zwei Teilstrahlengänge (14,14',14",15,15',15") (optischen Kanal) die derart angeordnet sind, daß jeweils ein Photon in jeweils einen Teilstrahlengang der Vorrichtung eingekoppelt wird;
- Mitteln (24,25,26-30) zur Zusammenführung der beiden Teilstrahlengänge (14,15,14',14",15',15") auf einem Strahlteiler (18,31-36), mit welchem die Teilstrahlen (14,15,14',14",15',15") überlagert und in zwei gemeinsame Ausgangskanäle überführt werden;
- einem Interferometer (7-13), das in einem der Teilstrahlengänge (14) angeordnet ist und dessen Interferometerarme (22,23) die optischen Weglängen $\delta l_F$ und $\delta l_S$ aufweisen;
- einer optischen Verzögerungsstrecke (19) der optischen Länge $\delta l$, die im anderen Teilstrahlengang (15) angeordnet ist;
- Mitteln (20,21) zur Veränderung der optischen Weglängen $\delta l_F$, $\delta l_S$ und/oder $\delta l$.

8. Vorrichtung nach Anspruch 7, **dadurch gekennzeichnet,**
**daß** die Lichtquelle ein optisch nichtlinearer Kristall in Verbindung mit einer Pumplichtquelle, insbesondere einem Laser, und einem optischen Filter zur Unterdrückung des Pumplichts am Ausgang des Kristalls ist, wobei ein Photonenpaar im Kristall durch parametrische Konversion eines Photons des Pumplichts (parametrische Fluoreszenz) erzeugt wird.

9. Vorrichtung nach Anspruch 7, **dadurch gekennzeichnet,**
**daß** die Lichtquelle eine optisch nichtlineare Faser bzw. ein entsprechendes, in bzw. an eine optisch lineare Faser ein- oder angefügtes nichtlineares Faserstück in Verbindung mit einer Pumplichtquelle, insbesondere einem Laser, und einem optischen Filter zur Unterdrückung des Pumplichts am Ausgang der Faser ist, wobei ein Photonenpaar in der Faser durch parametrische Fluoreszenz erzeugt wird.

10. Vorrichtung nach Anspruch 7, **dadurch gekennzeichnet,**
**daß** die Lichtquelle durch einen der Ausgänge wenigstens einer weiteren Vorrichtung nach Anspruch 7 oder durch eine Kombination mehrerer Ausgänge verschiedener derartiger Vorrichtungen gebildet ist.

11. Vorrichtung nach einem der Ansprüche 7 bis 10, **dadurch gekennzeichnet, daß** das Mittel zur Trennung kollinear emittierter Photonen eines Photonenpaars ein wellenlängenselektiver Spiegel oder ein Polarisator oder ein polarisierender Strahlteiler ist.

12. Vorrichtung nach einem der Ansprüche 7 bis 11, **dadurch gekennzeichnet, daß** die optischen Weglängen $\delta l_F$, $\delta l_S$ und/oder $\delta l$ mittels eines oder mehrerer mechanischer und/oder elektrooptischer Stellelemente, die vorzugsweise fernsteuerbar sind, veränderbar sind.

13. Vorrichtung nach Anspruch 12 , **dadurch gekennzeichnet,**
**daß** die Stellelemente elektronisch ansteuerbare Flüssigkristallzellen und/oder elektrooptische Kristallmodulatoren sind.

14. Vorrichtung nach einem der Ansprüche 7 bis 13, **dadurch gekennzeichnet, daß** das Interferometer ein Mach-Zehnder-Interferometer oder ein Michelson-Interferometer oder ein Fabry-Perot-Interferometer oder ein Echelon ist.

15. Vorrichtung nach einem der Ansprüche 7 bis 13, **dadurch gekennzeichnet, daß** das Interferometer ein linear doppelbrechender Kristall, insbesondere eine Quarzplatte, ist, deren optische Gangdifferenz gegebenenfalls durch einen zusätzlichen Kompensator, insbesondere einen Babinet-Soleil-Kompensator oder eine elektrisch abstimmbare Verögerungsplatte wie Flüssigkristallzelle, Kerrzelle und dergleichen, derart erweitert ist, daß die optische Gangdifferenz $\delta l_F - \delta l_S$ um mehr als eine halbe Wellenlänge des in den betreffenden Teilstrahlengang eingekoppelten Lichts veränderbar ist.

16. Vorrichtung nach einem der Ansprüche 7 bis 15, **dadurch gekennzeichnet, daß** die einzelne, vorzugsweise alle, Komponenten auf der Grundlage optischer Lichtwellenleiter oder optischer Fasern ausgeführt sind.

17. Vorrichtung nach Anspruch 16, **dadurch gekennzeichnet,**
**daß** der Strahlteiler ein optischer Faserkoppler ist, der vorzugsweise das Teilungsverhältnis 1:1 hat.

18. Vorrichtung nach einem der Ansprüche 7 bis 17, **dadurch gekennzeichnet, daß** in einen oder beide Teilstrahlengänge (14,15) zusätzlich ein oder mehrere intensitätsverändernde Absorber (39) und/oder polarisations- und/oder phasen- und/oder frequenzverändernde Stellelemente (38,40,41) eingebracht sind zur Beeinflussung der Menge, Polarisation, Phase und/oder Frequenz der entsprechenden Photonen.

19. Vorrichtung nach einem der Ansprüche 7 bis 17, **dadurch gekennzeichnet, daß** in einen oder beide Teilstrahlengänge zusätzlich ein oder mehrere optische Speicher eingefügt sind, vorzugsweise in der Form von Glasfaserschleifen oder Fabry-Perot-Resonatoren.

20. Netzwerk, gebildet aus einer Mehrzahl von Vorrichtungen nach einem der Ansprüche 7 bis 17 durch Parallelschalten und/oder Hintereinanderschalten derselben, wobei jeweils einer oder beide Ausgänge einer oder mehrerer Vorrichtungen einer weiteren Vorrichtung als Lichtquelle dienen können.

**Claims**

1. Method for selectively generating single photons or photon pairs in an optical channel (16, 17) with the following steps:

- creation of a two-photon state (photon pair);
- spatially separating the photon pair while preserving the quantum mechanical correlation in the event that the photons are emitted collinearly;

- coupling of each photon into an optical channel (14, 14', 14"), wherein one channel (15, 15', 15") contains an interferometer (7-13) with variable optical path length difference $\delta l_F - \delta l_S$, and the other channel contains an optical delay line (19) of optical length $\delta l$;

- spatial combination of the two channels by means of a beam splitter (18, 31-36);

- matching of the quantities $\delta l_F$, $\delta l_S$, $\delta l$ such that the probability K for coincidence between the outputs (16, 17) of the beam splitter is selectively approximately K=0 or approximately K=1 or approximately a predetermined intermediate value, where K=0 corresponds to a photon pair in one of the output channels (16, 17) of the beam splitter and K=1 corresponds to two single photons in the two output channels of the beam splitter.

2.  Method according to claim 1, **characterized in that** the photon pair is generated through parametric fluorescence **in that** an optically nonlinear crystal (1, 1', 2) is pumped with laser light at the frequency $2_{\omega 0}$ or the wavelength $\frac{1}{2}\lambda_0$.

3.  Method according to claim 2, **characterized in that** laser pumping light having a coherence length greater than the path length difference $\delta 1_F - \delta 1_S$ in the interferometer is used.

4.  Method according to any one of claims 1 through 3, **characterized in that** the optical path length difference in the interferometer ($\delta l_F - \delta l_S$) is set to approximately an integer multiple of half the average wavelength $\lambda_0$ of the photons of the photon pair, thus $|\delta l_F - \delta l_S| = \frac{n}{2}\lambda 0$, where n=0, 1, 2..., and $\delta 1$ is matched to the average optical path difference $\frac{1}{2}(\delta l_F + \delta l_S)$ of the interferometer, which is to say $\delta l \approx \frac{1}{2}(\delta l_F + \delta l_S)$, where the transition from n to n$\pm$1 corresponds to the transition from K$\approx$0 to K$\approx$1 or vice versa.

5.  Method according to any one of claims 1 through 3, **characterized in that** the probability K for coincidence between the outputs of the beam splitter is determined as a function of the quantities $\delta l_F$, $\delta l_S$ and/or $\delta l$ **in that** two detectors are placed at the outputs of the beam splitter and the coincidence rate is measured experimentally, with each setting of $\delta l_F$, $\delta l_S$ and $\delta l$ that results in K$\approx$0 and/or K$\approx$1 and/or a predetermined intermediate value being recorded.

6.  Method according to claim 4 or 5, **characterized in that** transitions are made between the cases with K$\approx$0 or K$\approx$1 or an intermediate value by means of remotely controlled changes in the quantities $\delta 1_F$, $\delta 1_S$ and/or $\delta l$.

7.  Apparatus for carrying out the method according to any one of the preceding claims, in particular as a controllable light source for one-photon or two-photon states and/or as a controllable switch or controllable gate for quantum states, consisting of

- a light source (3, 4, 5, 6) for quantum-optically correlated photon pairs;
- means for separating the photon pairs in the case that the photons are emitted collinearly;
- at least two component beam paths (14, 14', 14", 15, 15', 15") (optical channel) arranged such that one photon is coupled into one component beam path of the apparatus in each case;
- means (24, 25, 26-30) for combining the two component beam paths (14, 15, 14', 14", 15', 15") at a beam splitter (18, 31-36) with which the component beam paths (14, 15, 14', 14", 15', 15") are superimposed and transferred to two common output channels;
- an interferometer (7-13) that is arranged in one of the component beam paths (14) and whose interferometer arms (22, 23) have the optical path lengths $\delta l_F$ and $\delta l_S$;
- an optical delay line (19) with optical length $\delta l$ that is arranged in the other component beam path (15);
- means (20, 21) for changing the optical path lengths $\delta l_F$, $\delta l_S$ and/or $\delta l$.

8.  Apparatus according to claim 7, **characterized in that** the light source is an optically nonlinear crystal in combination with a pumping light source, in particular a laser, and an optical filter for suppressing the pumping light at the output of the crystal, wherein a photon pair is generated in the crystal through parametric conversion of a photon of the pumping light (parametric fluorescence).

9.  Apparatus according to claim 7, **characterized in that** the light source is an optically nonlinear fiber or a corresponding nonlinear fiber section inserted in or appended to an optically linear fiber in combination with a pumping light source, in particular a laser, and an optical filter for suppressing the pumping light at the output of the fiber, wherein a photon pair is generated in the fiber through parametric fluorescence.

10. Apparatus according to claim 7, **characterized in that** the light source is formed by one of the outputs of at least one additional apparatus according to claim 7 or by a combination of multiple outputs of different such apparatuses.

11. Apparatus according to any one of claims 7 through 10, **characterized in that** the means for separating collinearly emitted photons of a photon pair is a wavelength-selective mirror or a polarizer or a polarizing beam splitter.

12. Apparatus according to any one of claims 7 through 11, **characterized in that** the optical path lengths $\delta l_F$, $\delta l_S$ and/or $\delta l$ can be changed by means of one or more mechanical and/or electro-optical actuating elements, which are preferably remotely controllable.

13. Apparatus according to claim 12, **characterized in that** the actuating elements are electronically controllable liquid crystal cells and/or electro-optical crystal modulators.

14. Apparatus according to any one of claims 7 through 13, **characterized in that** the interferometer is a Mach-Zehnder interferometer or a Michelson interferometer or a Fabry-Perot interferometer or an echelon.

15. Apparatus according to any one of claims 7 through 13, **characterized in that** the interferometer is a linear birefringent crystal, in particular a quartz plate whose optical path difference is if necessary expanded by an additional compensator, in particular a Soleil compensator or an electrically tunable delay plate such as a liquid crystal cell, Kerr cell, and the like, in such a manner that the optical path difference $\delta l_F$ - $\delta l_S$ can be changed by more than a half wavelength of the light coupled into the applicable component beam path.

16. Apparatus according to any one of claims 7 through 15, **characterized in that** the individual components, preferably all components, are designed on the basis of optical waveguides or optical fibers.

17. Apparatus according to claim 16, **characterized in that** the beam splitter is an optical fiber coupler that preferably has a division ratio of 1:1.

18. Apparatus according to any one of claims 7 through 17, **characterized in that** one or more intensity-changing absorbers (39) and/or polarization- and/or phase- and/or frequency-altering actuating elements (38, 40, 41) are additionally introduced into one or both component beam paths (14, 15) in order to influence the quantity, polarization, phase and/or frequency of the corresponding photons.

19. Apparatus according to any one of claims 7 through 17, **characterized in that** one or more optical storage devices, preferably in the form of glass-fiber loops or Fabry-Perot resonators, are additionally inserted into one or both component beam paths.

20. Network comprised of a plurality of apparatuses according to any one of claims 7 through 17 through parallel connections and/or series connections thereof, wherein one or both outputs of one or more apparatuses can each serve as a light source for an additional apparatus.

**Revendications**

1. Procédé de production au choix de photons individuels ou de paires de photons dans un canal optique (16, 17) comprenant les étapes suivantes :

   - production d'un état à deux photons (paire de photons) ;
   - séparation spatiale de la paire de photons avec obtention de la corrélation quantique au cas où les photons seraient émis colinéairement ;
   - couplage respectivement d'un photon dans respectivement un canal optique (14, 14', 14"), l'un des canaux (15, 15, 15") contenant un interféromètre (7-13) à différence de longueur de trajet optique variable $\delta l_F$- $\delta l_S$ et l'autre canal contenant une ligne de retard optique (19) de longueur optique $\delta l$;
   - recombinaison spatiale des deux canaux par un séparateur de faisceau (18, 31-36);
   - accord des grandeurs $\delta l_F$, $\delta l_S$ et $\delta l$ de manière telle que la probabilité K pour des coïncidences entre les sorties (16, 17) du séparateur de faisceau soit facultativement égale à environ K = 0 ou bien à K = 1 ou bien à une valeur intermédiaire prédéterminée, K = 0 correspondant à une paire de photons dans l'un des canaux de sortie (16, 17) du séparateur de faisceau et K = 1 correspondant à deux photons individuels dans les deux canaux de sortie du séparateur de faisceau.

2. Procédé selon la revendication 1, **caractérisé en ce que** la paire de photons est produite par fluorescence paramétrique en pompant un cristal (1,1', 2) optiquement non linéaire avec de la lumière laser de fréquence $2\omega_0$ ou de longueur d'onde $\frac{1}{2} \lambda_0$.

3. Procédé selon la revendication 2, **caractérisé en ce qu'**on utilise de la lumière de laser de pompage dont la longueur de cohérence est supérieure à la différence de longueur de trajet $\delta l_F - \delta l_S$ dans l'interféromètre.

4. Procédé selon l'une des revendications 1 à 3, **caractérisé en ce que** la différence de longueur de trajet optique dans l'interféromètre $(\delta 1_F - \delta 1_S)$ peut être réglée à un multiple de numéros entiers de la moitié de la longueur d'onde moyenne $\lambda_0$ des photons de la paire de photons, à savoir à $|\delta l_F - \delta l_S| = n/2 \, \lambda_0$ où n = 0, 1, 2..., et $\delta 1$ est aligné sur la différence de marche moyenne $\frac{1}{2} (\delta l_F + \delta l_S)$ de l'interféromètre, à savoir à $\delta l = \frac{1}{2} (\delta l_F + \delta l_S)$, la transition de n à $n \pm 1$ correspondant à la transition de $K \approx 0$ à $K \approx 1$ ou vice-versa.

5. Procédé selon l'une des revendications 1 à 3, **caractérisé en ce que** la probabilité K pour des coïncidences entre les sorties du séparateur de faisceau est déterminée en fonction des grandeurs $\delta l_F$, $\delta l_S$ et/ou $\delta l$ en fixant deux détecteurs sur les sorties du séparateur de faisceau et en mesurant le taux de coïncidence de manière expérimentale, les réglages $\delta l_F$, $\delta l_S$ et $\delta l$ conduisant à $K \approx 0$ et/ou à $K \approx 1$ et/ou à une valeur intermédiaire prédéterminée étant respectivement consignés.

6. Procédé selon la revendication 4 ou 5, **caractérisé en ce qu'**on commute entre les cas avec $K \approx 0$ ou $K \approx 1$ ou une valeur intermédiaire par variation télécommandée des grandeurs $\delta 1_F$, $\delta 1_S$ et/ou $\delta l$.

7. Dispositif pour la mise en oeuvre du procédé selon l'une des revendications précédentes, notamment sous la forme d'une source lumineuse réglable pour des états à un photon ou à deux photons et/ou sous la forme d'un filtre de bande réglable ou d'une grille réglable pour des états quantiques, composé

   - d'une source lumineuse (3, 4, 5, 6) pour des paires de photons corrélées quantiquement ;
   - de moyens de séparation des paires de photons au cas où les photons seraient émis colinéairement ;
   - d'au moins deux trajets de faisceaux partiels (14, 14', 14", 15, 15', 15") (canal optique) agencés de manière à coupler respectivement un photon dans respectivement un trajet de faisceaux partiels du dispositif ;
   - de moyens (24, 25, 26-30) de recombinaison des deux trajets de faisceaux partiels (14, 15, 14', 14", 15', 15") sur un séparateur de faisceau (18, 31-36), au moyen duquel les faisceaux partiels (14, 15, 14', 14", 15', 15") sont superposés et dirigés vers deux canaux de sortie communs ;
   - d'un interféromètre (7-13) agencé dans l'un des trajets de faisceaux partiels (14) et dont les bras d'interféromètre (22, 23) comportent les longueurs de trajet optique $\delta l_F$ et $\delta l_S$;
   - d'un trajet de retard optique (19) de longueur optique $\delta l$ agencé dans l'autre trajet de faisceaux partiels (15) ;
   - de moyens (20, 21) de variation des longueurs de trajet optique $\delta l_F$, $\delta l_S$ et/ou $\delta l$.

8. Dispositif selon la revendication 7, **caractérisé en ce que** la source lumineuse est un cristal optiquement non linéaire associé à une source de lumière de pompage, notamment un laser, et à un filtre optique destiné à supprimer la lumière de pompage à la sortie du cristal, une paire de photons étant produite dans le cristal par conversion paramétrique (fluorescence paramétrique) d'un photon de la lumière de pompage.

9. Dispositif selon la revendication 7, **caractérisé en ce que** la source lumineuse est une fibre optiquement non linéaire ou un morceau de fibre non linéaire correspondant intégré dans ou ajouté à une fibre optiquement linéaire, associé à une source de lumière de pompage, notamment un laser, et à un filtre optique destiné à supprimer la lumière de pompage à la sortie de la fibre, une paire de photons étant produite dans la fibre par fluorescence paramétrique.

10. Dispositif selon la revendication 7, **caractérisé en ce que** la source lumineuse est constituée par l'une des sorties d'au moins un autre dispositif selon la revendication 7 ou par une combinaison de plusieurs sorties de différents dispositifs de ce genre.

11. Dispositif selon l'une des revendications 7 à 10 **caractérisé en ce que** le moyen de séparation de photons émis colinéairement d'une paire de photons est un miroir à sélection de longueur d'onde ou un polariseur ou un séparateur de faisceau polarisant.

12. Dispositif selon l'une des revendications 7 à 11 **caractérisé en ce qu'on** peut faire varier les longueurs de trajet optique $\delta 1_F$, $\delta l_S$ et/ou $\delta l$ au moyen d'un ou plusieurs organes de commande mécaniques et/ou électro-optiques, pouvant, de préférence, être commandés à distance.

**13.** Dispositif selon la revendication 12, **caractérisé en ce que** les organes de commande sont des cellules à cristaux liquides à commande électronique et/ou des modulateurs à cristaux électro-optiques.

**14.** Dispositif selon l'une des revendications 7 à 13 **caractérisé en ce que** l'interféromètre est un interféromètre de Mach-Zehrider ou un interféromètre de Michelson ou un interféromètre de Fabry-Perot ou un échelon.

**15.** Dispositif selon l'une des revendications 7 à 13 **caractérisé en ce que** l'interféromètre est un cristal à biréfringence linéaire, notamment une plaque de quartz, dont la différence de marche optique est étendue, le cas échéant, par un compensateur supplémentaire, notamment un compensateur de Babinet-Soleil ou une plaque de retard réglable électriquement, telle qu'une cellule à cristaux liquides, une cellule Kerr ou similaires, de manière à permettre de faire varier la différence de marche optique $\delta l_F - \delta l_S$ de plus d'une demi-longueur d'onde de la lumière couplée dans le trajet de faisceaux partiels concerné.

**16.** Dispositif selon l'une des revendications 7 à 15 **caractérisé en ce que** le composant individuel, de préférence tous les composants, sont réalisés sur la base de guides d'ondes optiques ou de fibres optiques.

**17.** Dispositif selon la revendication 16, **caractérisé en ce que** le séparateur de faisceau est un coupleur de fibres optiques dont le rapport de séparation est, dé préférence, de 1: 1.

**18.** Dispositif selon l'une des revendications 7 à 17 **caractérisé en ce qu'**un ou plusieurs absorbeurs (39) modifiant l'intensité et/ou des organes de commande (38, 40, 41) modifiant la polarisation et/ou la phase et/ou la fréquence sont en plus intégrés dans l'un ou dans les deux trajets de faisceaux partiels (14, 15) pour influer sur la quantité, la polarisation, la phase et/ou la fréquence des photons correspondants.

**19.** Dispositif selon l'une des revendications 7 à 17, **caractérisé en ce qu'**une ou plusieurs mémoires optiques, de préférence sous la forme de boucles de fibre de verre ou de résonateurs de Fabry-Perot sont en plus intégrées dans l'un ou dans les deux trajets de faisceaux partiels.

**20.** Réseau constitué d'une pluralité de dispositifs selon l'une des revendications 7 à 17 par montage en parallèle et/ou par montage en série de ceux-ci, une sortie ou les deux sorties d'un ou plusieurs dispositifs pouvant servir de source lumineuse à un autre dispositif.

TYP I

FIG. 1A

TYP II

FIG. 1B

FIG. 2

FIG. 3

FIG. 4

KASKADE

NETZ

EP 1 055 308 B1

16